# FASCICULE DE BREVET EUROPEEN

(11) **EP 2 868 838 B1**
(45) Date de publication et mention de la délivrance du brevet: **02.08.2017**
(21) Numéro de dépôt: 14306725.4
(22) Date de dépôt: 29.10.2014
(51) Int. Cl.: E04F 17/08, F16L 5/02, F16L 5/10, F16L 7/02, H02G 3/22, H02G 15/18, E04G 15/06

(54) **Boîtier de réservation pour élément de construction, notamment pour plancher, et élément de construction comportant un tel boîtier de réservation**
Aussparungskasten für Bauelement, insbesondere für Zimmerdecke, und Bauelement, das einen solchen Aussparungskasten umfasst
Reservation housing for construction element, in particular for floor, and construction element comprising such a reservation housing

(30) Priorité: 31.10.2013 FR 1360715
(43) Date de publication de la demande: 06.05.2015
(73) Titulaire: Lesage Developpement S.A.S., 68200 Mulhouse (FR)
(72) Inventeur: Kaplan, Denis, 68100 Mulhouse (FR); Kleck, Christophe, 77515 Faremoutiers (FR); Muller, Franck Xavier, 68440 Habsheim (FR)
(74) Mandataire: Koelbel, Caroline

(56) Documents cités:
- EP-A2- 1 780 456
- WO-A1-2007/082364
- CN-U- 202 111 433
- CN-Y- 201 187 109
- GB-A- 2 278 387
- GB-A- 2 306 200
- JP-A- H10 121 723
- JP-A- 2004 339 786
- US-A- 4 669 244
- US-A- 5 634 311
- US-A1- 2004 035 064
- US-A1- 2008 105 172

## Description

### Domaine technique :

La présente invention concerne un boitier de réservation agencé pour être intégré dans un élément de construction, tel qu'un plancher, et pour être traversé par un conduit technique comportant une gaine traversée par un câble, ledit boitier de réservation comportant au moins une paroi périphérique agencée pour s'étendre au moins en partie à travers ledit élément de construction, ladite paroi périphérique étant pourvue d'une extrémité inférieure fermée au moins en partie par une paroi inférieure et d'une extrémité supérieure fermée au moins en partie par une paroi supérieure, lesdites parois inférieure et supérieure comportant respectivement au moins un orifice inférieur et au moins un orifice supérieur agencés pour être traversés par ledit conduit technique, ledit boitier de réservation comporte des premier et second éléments d'étanchéité agencés pour assurer l'étanchéité à l'air de part et d'autre des extrémités inférieure et supérieure du boitier de réservation, le premier élément d'étanchéité étant agencé pour enserrer la gaine et garantir l'étanchéité à l'air autour de la gaine, ledit boitier de réservation comportant une première pièce et une deuxième pièce assemblées coaxialement pour former ladite paroi périphérique, ladite première pièce comportant l'extrémité inférieure dudit boitier de réservation et ladite deuxième pièce comportant l'extrémité supérieure dudit boitier de réservation. La présente invention concerne également un élément de construction tel qu'un plancher comportant un tel boitier de réservation.

### Technique antérieure :

La présente invention concerne le domaine de la fabrication d'éléments de construction, tel que des planchers ou des murs, traversés au moins en partie par un ou plusieurs conduits techniques. Plus particulièrement, elle concerne l'étanchéité à l'air des réservations permettant le passage des différents conduits techniques au travers d'un plancher. On entend par conduit technique, une gaine traversée par un élément souple tel qu'un câble électrique ou un tuyau hydraulique. Le câble électrique peut être monofilaire ou multifilaire. On parlera dans la suite de l'exposé de « câble » pour désigner cet élément souple. La présente invention permet de manière générale de garantir l'étanchéité à l'air autour du conduit technique, c'est à dire entre la gaine et le plancher et entre la gaine et le « câble ».

Habituellement, au moment de la construction d'un plancher, l'on prévoit le passage des gaines au travers du plancher. La plupart du temps, les gaines sont disposées perpendiculairement au coffrage du plancher, puis sont noyées dans celui-ci au moment du coulage du béton. Les câbles sont alors insérés dans les gaines pour traverser le plancher de part en part. Afin de garantir l'étanchéité à l'air autour de la gaine, il est connu d'enfiler un manchon en caoutchouc sur la gaine ou de poser une membrane sur le plancher et autour de la gaine. En outre, des bouchons peuvent être disposés à l'extrémité supérieure de la gaine et autour du câble afin de garantir l'étanchéité à l'air autour du câble. De telles solutions présentent l'inconvénient de nécessiter d'une pluralité d'éléments pour réaliser l'étanchéité et, par conséquent, de multiples interventions consommatrices de temps sur le chantier. De plus, les gaines doivent être prévues lors du coulage du plancher. Il en découle que le procédé de mise en oeuvre est long et fastidieux et sujet à des incertitudes de pose. Une autre méthode consiste à combler les entrées d'air entre la gaine et le plancher, d'une part, et entre le câble et la gaine, d'autre part, avec de la mousse expansive, telle que du polyuréthane. Dans tous les cas, l'étanchéité à l'air n'est pas optimale, ni reproductible. De plus, les techniques existantes sont artisanales et consommatrices de temps sur le chantier. Cette étanchéité à l'air peut faire l'objet de contrôle à postériori par exemple pour vérifier la conformité du bâtiment à une réglementation thermique en vigueur. En cas de défaillance, les remèdes sont souvent difficiles à mettre en oeuvre une fois le chantier terminé.

L'on connaît de la publication US 4,669,244 A une boite d'étanchéité traversée par un tuyau et formée par un premier élément tubulaire recevant un second élément tubulaire par emboitement. Le premier élément tubulaire et le second élément tubulaire sont pourvus respectivement à leurs extrémités inférieure et supérieure d'un premier couvercle et d'un second couvercle. Une ouverture centrale est ménagée dans chacun des couvercles, dans laquelle est disposé un joint d'étanchéité. Toutefois, un tel boitier d'étanchéité présente l'inconvénient de ne pas être adaptable à tous types d'épaisseurs d'élément de construction. Il en résulte que le fabricant doit pouvoir proposer une large gamme de boites d'étanchéité présentant des hauteurs diverses.

US 4,669,244 A divulgue les caractéristiques des préambules des revendications 1,2 et 3.

La publication GB 2 306 200 A décrit un manchon constitué d'une seule pièce traversant une ouverture prévue dans un mur et recevant un tuyau. Les extrémités du manchon sont pourvues chacune d'un couvercle en forme de dôme comportant une portion annulaire centrale munie d'un joint annulaire d'étanchéité de type rondelle ou oeillet. Dans ce cas également, le manchon présente l'inconvénient de ne pas être adaptable à toutes épaisseurs d'élément de construction. En effet, le manchon doit être coupé pour être ajusté à l'épaisseur de l'élément de construction. Il en résulte des pertes de matière, puisque le manchon doit être prévu plus long que nécessaire.

La publication DE 196 00 261 C1 décrit également un manchon traversant un mur pour recevoir un tuyau. Le manchon est constitué d'un assemblage de pièces comportant des moyens de liaison complémentaires de type mâle/femelle. Toutefois, là encore l'ajustement de la hauteur du manchon n'est pas optimal, puisqu'il est nécessaire de faire varier le nombre de pièces constituant le manchon pour permettre un ajustement correspondant grossièrement à l'épaisseur de l'élément de construction, sans pouvoir proposer un ajustement précis.

### Exposé de l'invention :

La présente invention vise à pallier ces inconvénients en proposant un boitier de réservation permettant de faire passer des conduits techniques au travers d'un élément de construction de façon étanche, qui soit facile à mettre en oeuvre lors des étapes de fabrication de l'élément de construction, qui puisse être adapté simplement à tous types d'épaisseurs d'élément de construction, facile à stocker, et enfin apte à optimiser l'isolation thermique et phonique en respectant la réglementation en vigueur.

Dans ce but, l'invention selon une première forme de réalisation concerne un boitier de réservation du genre indiqué en préambule, caractérisé en ce que la première et la deuxième pièces comportent chacune des moyens de liaison agencés pour permettre leur assemblage et pour ajuster la hauteur dudit boitier de réservation, en ce qu'il comporte une troisième pièce intermédiaire disposée entre lesdites première et deuxième pièces et comportant des moyens de liaison agencés pour coopérer avec les moyens de liaison des première et deuxième pièces, en ce que lesdits moyens de liaison sont des moyens de liaison à vis permettant un ajustement continu de la hauteur, en ce que le moyen de liaison de la première pièce est constitué d'au moins un tronçon femelle taraudé, en ce que le moyen de liaison de la deuxième pièce est constitué d'au moins un embout male fileté et en ce que les moyens de liaison de la troisième pièce intermédiaire consistent, d'une part, en un embout male fileté agencé pour coopérer avec le tronçon femelle taraudé de la première pièce et, d'autre part, en un tronçon femelle taraudé agencé pour coopérer avec l'embout male fileté de la deuxième pièce, en ce que ledit second élément d'étanchéité est agencé pour enserrer ledit câble et pour garantir l'étanchéité à l'air autour du câble, en ce que ledit premier élément d'étanchéité est disposé à l'extérieur de la paroi inférieure et en ce que ledit second élément d'étanchéité est disposé à l'extrémité de l'embout mâle de la deuxième pièce.

Dans ce but également, l'invention selon une deuxième forme de réalisation concerne un boitier de réservation du genre indiqué en préambule, caractérisé en ce que la première et la deuxième pièces comportent chacune des moyens de liaison agencés pour permettre leur assemblage et pour ajuster la hauteur dudit boitier de réservation, en ce que les première et deuxième pièces sont identiques et comportent chacune des moyens de liaison consistant, d'une part, en un tronçon femelle taraudé situé à une extrémité et, d'autre part, en un embout male fileté situé à l'autre extrémité, en ce que l'extrémité de la pièce comportant l'embout male est de forme sensiblement conique orientée vers le haut dudit boitier de réservation, est constituée d'une pluralité de languettes radiales flexibles et est terminée par un orifice, en ce que ledit second élément d'étanchéité est agencé pour enserrer ledit câble et pour garantir l'étanchéité à l'air autour du câble, et en ce que l'embout male de chaque première et deuxième pièces est muni d'un des premier et second éléments d'étanchéité lequel est disposé sur ledit orifice.

Dans ce but enfin, l'invention selon une troisième forme de réalisation concerne un boitier de réservation du genre indiqué en préambule, caractérisé en ce que la première et la deuxième pièces comportent chacune des moyens de liaison agencés pour permettre leur assemblage et pour ajuster la hauteur dudit boitier de réservation, en ce qu'il comporte une troisième pièce intermédiaire disposée entre lesdites première et deuxième pièces et comportant des moyens de liaison agencés pour coopérer avec les moyens de liaison des première et deuxième pièces, en ce que ledit boitier de réservation est de construction télescopique, en ce que les moyens de liaison de la première pièce avec la troisième pièce consistent en une liaison glissière crantée, en ce que ledit second élément d'étanchéité est agencé pour enserrer ledit câble et pour garantir l'étanchéité à l'air autour du câble, en ce que ledit premier élément d'étanchéité est disposé à l'extérieur de la paroi inférieure, en ce que ledit second élément d'étanchéité est disposé à l'intérieur de la paroi supérieure. Selon la première variante de l'invention, le premier élément d'étanchéité peut comporter une ouverture adaptée pour épouser la gaine et le second élément d'étanchéité peut comporter une encoche prédécoupée adaptée pour épouser le câble.

Dans la première variante de réalisation, ledit second élément d'étanchéité de l'extrémité supérieure du boitier de réservation est situé entre ladite deuxième pièce et ladite troisième pièce intermédiaire.

Dans la troisième variante de réalisation, les moyens de liaison de la deuxième pièce avec la troisième pièce peuvent consister en une liaison glissière crantée ou en une liaison male-femelle filetée.

De préférence, ladite paroi inférieure présente une forme sensiblement conique orientée vers le haut dudit boîtier et terminée par ledit orifice inférieur. Dans ce cas, ladite paroi inférieure peut être constituée d'une pluralité de languettes radiales flexibles.

Dans la deuxième variante de réalisation, la première pièce peut comporter ledit premier élément d'étanchéité lequel est localisé à mi-hauteur dudit boitier et la deuxième pièce peut comporter ledit second élément d'étanchéité lequel est localisé à l'extrémité supérieure dudit boitier.

Lesdits éléments d'étanchéité peuvent être constitués de membranes élastiques et étanches.

Le boitier de réservation peut comporter des organes de fixation s'étendant radialement de la paroi inférieure ou de la paroi périphérique et agencés pour maintenir en position ledit boitier de réservation sur le coffrage et/ou pour assembler deux boitiers de réservation adjacents.
De même, la paroi périphérique peut être cylindrique et comporter sur une partie au moins de sa face externe des gorges périphériques pour améliorer l'ancrage du boitier de réservation dans l'élément de construction.

Les orifices inférieur et supérieur du boitier de réservation sont de préférence coaxiaux et le diamètre de l'orifice inférieur est de préférence supérieur au diamètre de l'orifice supérieur.

Dans ce but, l'invention concerne également un élément de construction du genre indiqué en préambule, caractérisé en ce qu'il comporte au moins un boitier de réservation tel que décrit ci-dessus, ledit boitier de réservation étant intégré et s'étendant au moins en partie à travers ledit élément de construction pour être traversé au moins en partie par un conduit technique comportant une gaine traversée par un câble, ledit boitier de réservation étant agencé pour pouvoir être ajusté en hauteur à l'épaisseur dudit élément de construction et pour garantir l'étanchéité à l'air autour de la gaine et autour du câble de part et d'autre dudit boîtier de réservation.

### Description sommaire des dessins :

La présente invention et ses avantages apparaîtront mieux dans la description suivante de plusieurs modes de réalisation donnés à titre d'exemples non limitatifs, en référence aux dessins annexés, dans lesquels:
- la figure 1 représente une vue en perspective d'une première variante de réalisation d'un boitier de réservation selon l'invention,
- la figure 2 est une vue en coupe axiale du boitier de réservation de la figure 1 avec des éléments d'étanchéité,
- les figure 3A et 3B sont des vues de dessous du boitier de réservation de la figure 1 respectivement sans et avec des éléments d'étanchéité,
- la figure 4 est une vue en perspective de plusieurs boitiers de réservation adjacents,
- la figure 5 est une vue de dessous des boitiers de réservation de la figure 4,
- la figure 6 est une vue de face d'un boitier de réservation selon une deuxième variante de réalisation de l'invention sans élément d'étanchéité,
- la figure 7 est une vue en coupe axiale du boitier de réservation de la figure 6 avec des éléments d'étanchéité,
- la figure 8 est une vue en perspective d'un boitier de réservation selon une troisième variante de réalisation de l'invention sans élément d'étanchéité,
- la figure 9 est une vue en coupe axiale du boitier de réservation de la figure 8,
- la figure 10 est une vue de face du boitier de réservation de la figure 8 en position rétractée,
- la figure 11 est une vue en perspective d'un boitier de réservation selon la troisième variante de réalisation de l'invention sans représentation des éléments d'étanchétté,
- la figure 12 est une vue en coupe axiale du boitier de réservation de la figure 11,
- la figure 13 est une vue de face du boitier de réservation de la figure 11 en position rétractée,
- la figure 14 est une vue en perspective de plusieurs boitiers de réservation de la figure 8 adjacents, et
- la figure 15 est une vue en perspective d'un plancher intégrant le boitier de réservation de la figure 1.

### Illustrations de l'invention et différentes manières de réaliser l'invention :

En référence aux figures, la présente invention concerne un boitier de réservation 1, 1', 1", 1"' destiné à être intégré dans un élément de construction 2 et à être traversé par un conduit technique 3 de façon étanche à l'air. Le boitier de réservation 1, 1', 1", 1"' comporte une paroi périphérique 6, dont la hauteur correspond au moins à l'épaisseur de l'élément de construction 2. Ses extrémités inférieure et supérieure 7, 8 sont fermées en partie par des parois inférieure et supérieure 9, 10. Elles sont munies respectivement d'un orifice inférieur et supérieur 11, 12 pour permettre le passage d'au moins un conduit technique 3 au travers du boitier de réservation 1, 1', 1", 1"'. En outre, le boitier de réservation 1, 1', 1", 1"' comporte au moins un élément d'étanchéité 13 qui permet de garantir l'étanchéité à l'air autour du conduit technique 3.

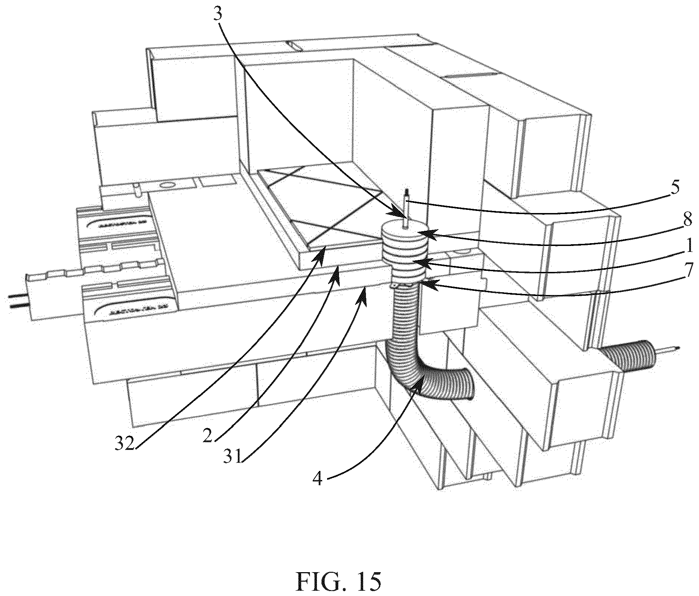

L'élément de construction 2 peut être un plancher ou un mur. Si l'élément de construction 2 est un plancher comme représenté à la figure 15, il peut comporter notamment une dalle de compression coulée dans un matériau hydraulique, tel que du béton, par exemple, sur un coffrage constitué de poutrelles précontraintes et d'entrevous. Le plancher peut également être un plancher coulé en plein, obtenu classiquement par coulage d'un matériau hydraulique sur un coffrage.

Le conduit technique 3 peut être une gaine 4 traversée par un câble 5. La gaine 4 permet de protéger et d'isoler le câble 5 de l'environnement extérieur.

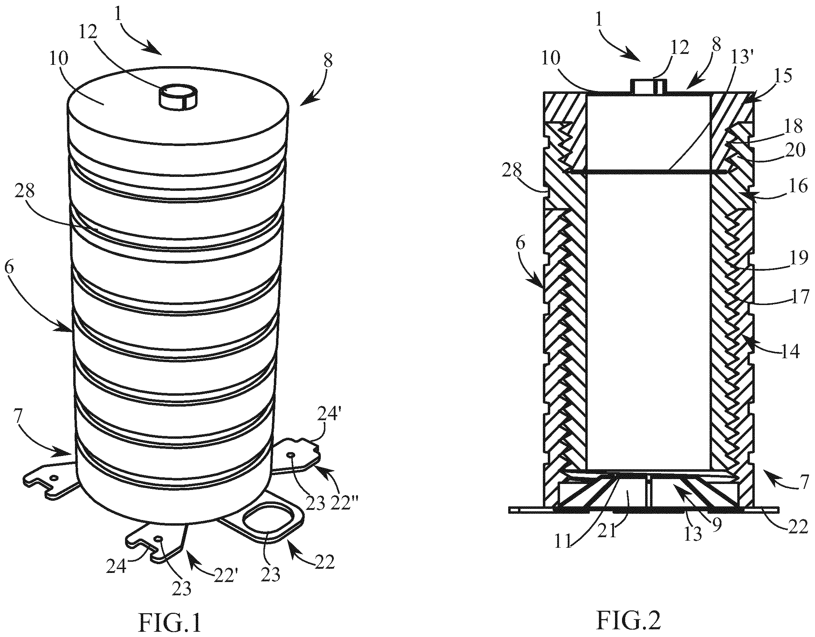

Dans une première variante de réalisation, illustrée aux figures 1 à 5, le boitier de réservation 1 est réalisé en trois pièces superposées, dite première pièce 14, deuxième pièce 15 et troisième pièce intermédiaire 16, qui forment la paroi périphérique 6, comme l'illustre les figures 2A et 2B. La superposition des trois pièces 14, 15, 16 permet d'ajuster la hauteur du boitier de réservation 1 en fonction de l'épaisseur de l'élément de construction 2, dans lequel il est intégré.

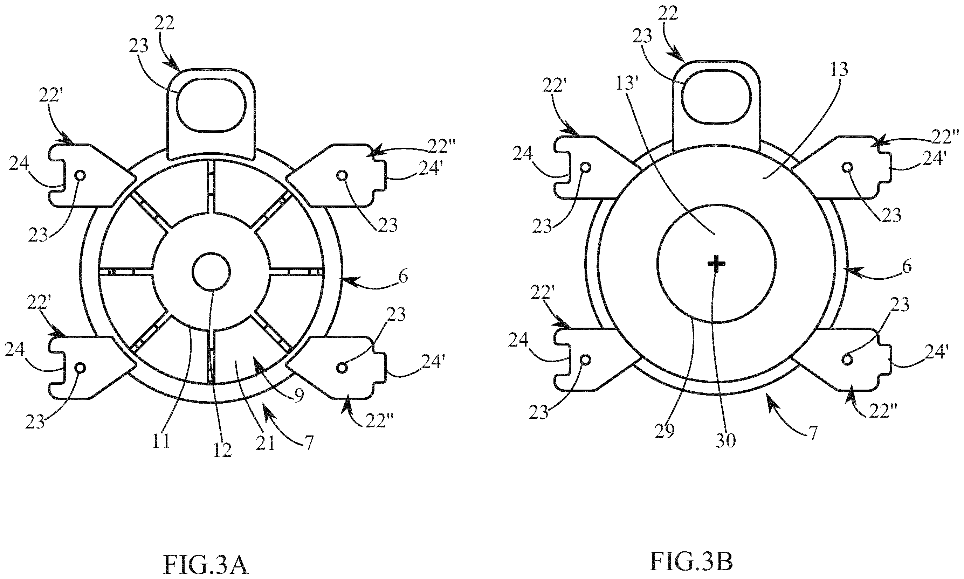

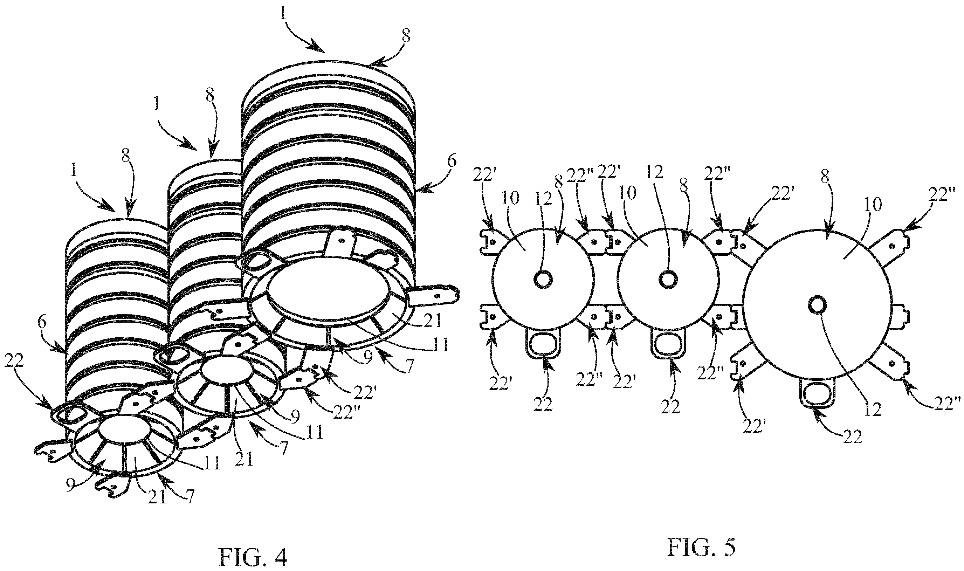

La première pièce 14 est de forme cylindrique et comporte l'extrémité inférieure 7 du boitier de réservation 1. Bien entendu, la paroi extérieure de la première pièce 14 peut présenter d'autres formes. L'extrémité inférieure 7 est fermée en partie par la paroi inférieure 9 qui forme le fond du boitier de réservation 1. Celle-ci présente une forme sensiblement conique, orientée vers le haut du boitier de réservation 1 et ouverte par l'orifice inférieur 11. De plus, la paroi inférieure 9 en forme de cône est discontinue est formée par une pluralité de languettes 21, comme cela est représenté à la figure 3A. Une telle configuration permet de guider le conduit technique 3, lors de son insertion dans l'orifice inférieur 11 et d'empêcher son retrait par l'orifice inférieur 11. En outre, elle permet de faire varier le diamètre de l'orifice inférieur 11. La paroi inférieure 9 comporte également des pattes de fixation 22, 22', 22" qui s'étendent radialement. Préférablement, elles comportent chacune au moins un orifice 23 qui permet de recevoir, par exemple, un organe de fixation tel qu'une vis ou un clou. Bien entendu, d'autres moyens de fixation peuvent être utilisés. Il en résulte que le boitier de réservation 1 peut être fixé sur le coffrage de l'élément de construction 2 avant le coulage de la dalle et peut être maintenu en position lors du coulage. La patte de fixation 22 représente une première forme de réalisation pourvue d'un orifice 23. Les pattes de fixation 22', 22" représentent deux autres formes de réalisation et peuvent comporter une zone d'emboitement 24, 24' orientée vers l'extérieur du boitier, selon. Dans la patte de fixation 22', la zone d'emboitement comporte une portion femelle 24, tandis que dans la patte de fixation 22", elle comporte une portion mâle 24'. Comme l'illustre les figures 4 et 5, les portions femelle 24 et mâle 24" des zones d'emboîtement sont complémentaires et permettent d'assembler et d'espacer deux boitiers de réservation 1 adjacents. Il en résulte une facilité de mise en place d'une pluralité de boitiers de réservation 1 sur le coffrage et un maintien en position efficace lors du coulage. La première pièce 14 comporte également un tronçon femelle 17, dont la paroi périphérique intérieure est taraudée sur toute sa hauteur. Un tel tronçon 17 constitue un moyen de liaison permettant de lier la première pièce 14 à la deuxième pièce 15 par l'intermédiaire d'une troisième pièce intermédiaire 16, comme cela est représenté notamment aux figures 2A et 2B. Bien entendu, d'autres organes de fixation peuvent être utilisés.

La deuxième pièce 15 a une forme cylindrique et comporte l'extrémité supérieure 8 du boitier de réservation 1 qui forme le couvercle du boitier de réservation 1. Bien entendu, la paroi extérieure de la deuxième pièce 15 peut présenter d'autres formes. L'extrémité supérieure 8 comporte notamment une paroi supérieure 10 qui est ouverte au moyen de l'orifice supérieur 12. En outre, la deuxième pièce 15 est munie d'un embout mâle 18 s'étendant perpendiculairement à la paroi supérieure 10 vers l'intérieur du boitier de réservation 1. Cet embout mâle 18 est fileté et constitue un moyen de liaison permettant aux première et deuxième pièces 14, 15 de coopérer par l'intermédiaire de la troisième pièce intermédiaire 16.

La troisième pièce intermédiaire 16 est cylindrique et ouverte de part en part. Elle comporte, d'une part, un embout mâle 19 situé à son extrémité dirigée vers l'extrémité inférieure 7 du boitier de réservation 1. Bien entendu, la paroi extérieure de la troisième pièce 15 peut présenter d'autres formes. L'embout mâle 19 est fileté sur toute sa hauteur pour coopérer avec le tronçon femelle 17 de la première pièce 14. Il en résulte que l'embout mâle 19 forme un moyen de liaison permettant d'assembler la première pièce 14 à la troisième pièce intermédiaire 16. D'autre part, cette troisième pièce intermédiaire 16 est munie d'un tronçon femelle 20 situé à son autre extrémité dirigée vers l'extrémité supérieure 8 du boitier de réservation 1. Ce tronçon femelle 20 est taraudé sur toute sa hauteur et permet de recevoir l'embout mâle 18 de la deuxième pièce 15. Par conséquent, le tronçon femelle 20 constitue des moyens de liaisons permettant aux deuxième et troisième pièces 15, 16 de coopérer entre elles. La coopération des moyens de liaison 17, 18, 19, 20 des première, deuxième et troisième pièces 14, 15, 16 permet de former un assemblage solide et d'ajuster facilement et de manière continue la hauteur du boitier de réservation 1 sans fragiliser la teneur mécanique dudit boîtier. Il en résulte qu'un même boitier de réservation 1 est adaptable à différentes épaisseurs d'éléments de construction 2.

Les orifices inférieur et supérieur 11, 12 du boitier de réservation 1 sont coaxiaux. Le diamètre de l'orifice inférieur 11 est supérieur au diamètre de l'orifice supérieur 12. En effet, cette configuration est particulièrement adaptée lorsque l'on souhaite faire passer, au travers d'un élément de construction 2, une gaine 4 dans laquelle est inséré un câble 5 de plus petite section. Par conséquent, l'orifice inférieur 11 entoure la gaine 4, tandis que l'orifice supérieur entoure le câble 5 uniquement, la gaine 4 s'arrêtant à l'intérieur du boitier de réservation 1.

Pour assurer l'étanchéité à l'air, au niveau des orifices inférieur et supérieur 11, 12, le boitier de réservation 1 comporte des éléments d'étanchéité 13, 13'. A cet effet, l'extérieure de la paroi inférieure 9 est revêtue d'un premier élément d'étanchéité 13. En outre, l'extrémité de l'embout mâle 18 de la deuxième pièce 15 comporte, quant à lui, un second élément d'étanchéité 13'. Ils sont formés par une membrane en matière élastique, telle qu'un élastomère du type EPDM (éthylène-propylène-diène monomère) qui peut être muni d'un bord adhésif ou toute autre matière équivalente. Les éléments d'étanchéité 13, 13' permettent d'enserrer le conduit technique 3. En particulier, dans la configuration illustrée dans les figures 2B et 3B, d'une part, le premier élément d'étanchéité 13 comporte une ouverture 29 qui permet d'enserrer et d'épouser la gaine 4 au niveau de l'extrémité inférieure 7 du boitier de réservation 1 pour garantir l'étanchéité à l'air autour de la gaine 4. D'autre part, le second élément d'étanchéité 13' comporte une encoche 30 prédécoupée qui permet d'enserrer et d'épouser le câble 5 pour garantir l'étanchéité autour du câble 5. Il en résulte que l'étanchéité à l'air est assurée de part et d'autre des extrémités inférieure et supérieure 7, 8 du boitier de réservation 1.

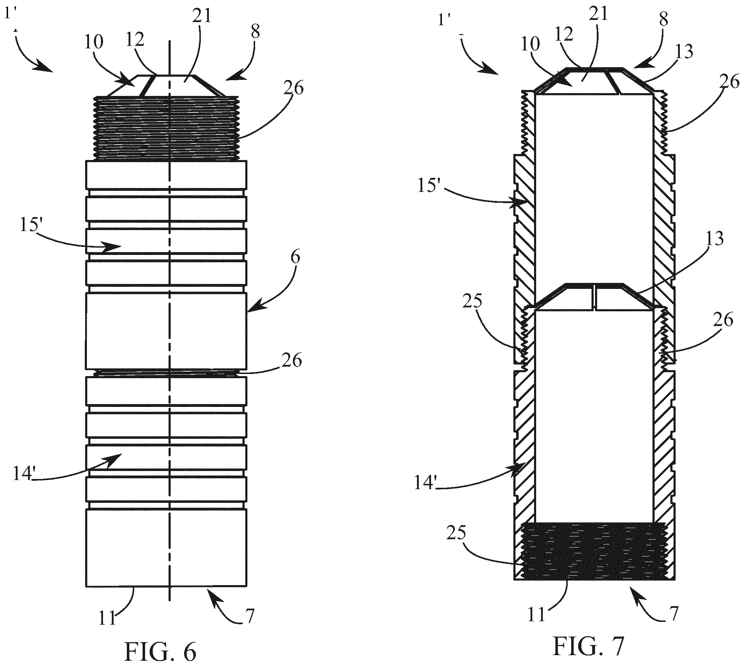

Selon une deuxième variante de réalisation représentée aux figures 6 et 7, le boitier de réservation l'est constitué de deux pièces, dites première et deuxième pièces 14', 15', qui sont identiques, coaxiales et superposées. Bien entendu, il est également possible de superposer plus de deux pièces, étant donné que celles-ci sont identiques. Elles forment la paroi périphérique 6 et présentent une forme sensiblement cylindrique. De plus, elles comportent à leur extrémité, dirigée vers l'extrémité inférieure 7 du boitier de réservation 1', un tronçon femelle taraudé 25 qui s'étend en partie le long de l'extrémité. En outre, elles comportent à leur extrémité dirigée vers l'extrémité supérieure 8 du boitier de réservation 1', un embout mâle fileté 26 qui s'étend en partie le long de l'extrémité. Cet embout mâle fileté 26 présente en outre une forme sensiblement conique comportant des languettes 21 et terminé par un orifice 27. L'embout male fileté 26 de la première pièce 14' s'emboite et se visse dans le tronçon femelle taraudé 25 de la deuxième pièce 15'. La hauteur du boitier de réservation 1' peut, par conséquent, être facilement ajustée et ce de manière continue. En outre, le tronçon femelle taraudée 25 de la première pièce 14' est situé à l'extrémité inférieure 7 du boitier de réservation 1' et forme l'orifice inférieur 11. A l'inverse, l'embout male fileté 26 de la deuxième pièce 15' est situé à l'extrémité supérieure 8 du boitier de réservation 1' et comporte l'orifice supérieur 12.

Pour assurer l'étanchéité à l'air, au niveau des orifices inférieur et supérieur 11, 12, le boitier de réservation 1' comporte des éléments d'étanchéité 13, comme l'illustre la figure 7. A cet effet, l'embout mâle fileté 26 de chaque première et deuxième pièces 14', 15' est muni d'un élément d'étanchéité 13 disposé sur l'orifice 27. Les éléments d'étanchéité 13 permettent d'enserrer le conduit technique 3 traversant ledit boitier de réservation 1'. L'élément d'étanchéité 13 de la première pièce 14' localisé à mi-hauteur du boitier permet d'enserrer la gaine 4, tandis que l'élément d'étanchéité 13 de la seconde pièce 14' localisé à l'extrémité supérieure du boitier permet d'enserrer le câble 5. Il en résulte que l'étanchéité à l'air est assurée de part et d'autre des extrémités inférieure et supérieure 7, 8 du boitier de réservation 1'. Dans le cas où finalement aucun câble 5 n'est passé à travers la gaine 4, un couvercle étanche peut être vissé sur l'embout male 26 pour fermer l'extrémité supérieure 8 afin d'assurer une protection du boitier de réservation 1'.

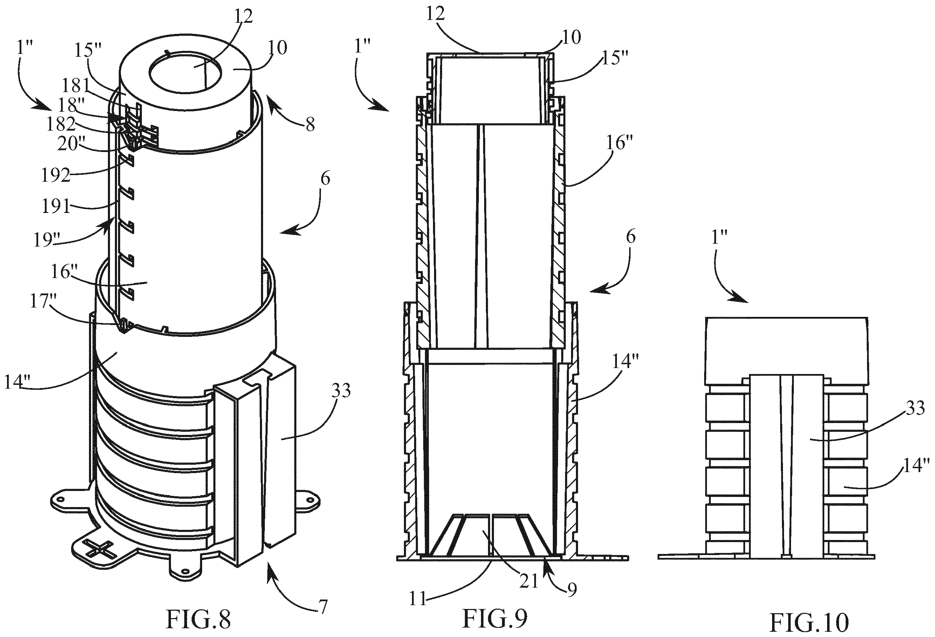

Selon une troisième variante de réalisation représentée aux figures 8 à 10, le boitier de réservation 1" est constitué de trois pièces coaxiales, gigognes, pouvant coulisser les unes dans les autres pour former un boitier de réservation 1" télescopique. Ces trois pièces comportent une première pièce 14", une deuxième pièce 15" et une troisième pièce intermédiaire 16" qui forment ensemble la paroi périphérique 6 du boitier de réservation 1". La deuxième pièce 15"s'emboite et coulisse dans la troisième pièce 16" qui elle-même s'emboite et coulisse dans la première pièce 14". Cette configuration permet d'obtenir une paroi périphérique 6 télescopique. Il en résulte qu'il est possible d'ajuster la hauteur du boitier de réservation 1" en fonction de l'épaisseur de l'élément de construction 2, dans lequel il est intégré. Pour permettre de faire varier la hauteur du boitier de réservation 1" puis de la bloquer en position, les première, deuxième et troisième pièces 14", 15", 16" comportent des moyens de liaison 17", 18", 19", 20" à crans.

La première pièce 14" comporte à son extrémité supérieure et sur sa surface interne un ergot 17" agencé pour coopérer avec les moyens de liaison 19" de la troisième pièce 16". La troisième pièce 16" comporte en effet une rainure 19"située sur sa surface externe formant des moyens de liaison avec la première pièce 14". La rainure 19" comporte une rainure principale 191 selon une direction axiale et une pluralité de rainures secondaires 192 en forme de L perpendiculaires à la rainure principale 191. Les rainures secondaires 192 sont réparties selon un pas constant le long de la rainure principale 191. Chaque rainure secondaire 192 forme un cran dans lequel peut être verrouillé l'ergot 17" de la première pièce 14". Pour régler la hauteur de la troisième pièce 16" par rapport à la première pièce 14", l'on fait coulisser l'ergot 17" le long de la rainure principale 191 jusqu'à une rainure secondaire 192 selon la hauteur désirée. Puis, l'on verrouille l'ergot 17"en faisant tourner la troisième pièce 16" par rapport à la première pièce 14" jusqu'à ce que l'ergot 17" bute dans le fond de la rainure secondaire 192 en forme de L. Cet agencement des moyens de liaison 17", 19" des première et troisième pièces 14", 16" forme une liaison glissière crantée. En outre, la troisième pièce 16" comporte à son extrémité supérieure et sur sa surface interne un moyen de liaison agencé pour coopérer avec la deuxième pièce 15", sous la forme d'un ergot 20" similaire à l'ergot 17" de la première pièce 14". La deuxième pièce 15" comporte en effet une rainure 18" située sur sa surface externe formant des moyens de liaison 18" avec la troisième pièce 14". La rainure 18" comporte une rainure principale 181 selon une direction axiale et une pluralité de rainures secondaires 182 en forme de L perpendiculaires à la rainure principale 181. Les rainures secondaires 182 sont réparties selon un pas constant le long de la rainure principale 181 et de part et d'autre de celle-ci pour assurer un réglage fin. Il en résulte que les première, deuxième et troisième pièces 14", 15", 16" sont assemblées entres elles de façon télescopique par les moyens de liaison 17", 18", 19", 20" de type liaison glissière crantée. En outre, une telle configuration permet d'ajuster la hauteur de la boite d'étanchéité 1" de façon discontinue. Avantageusement, ces moyens des liaison 17", 18", 19", 20" de type glissière crantée permettent de diminuer le cout de fabrication, en comparaison à une liaison par filetage. Cet assemblage télescopique présente également un autre avantage comme le présente la figure 10, puisque que les deuxième et troisième pièces 15", 16" peuvent être rétractées à l'intérieur de la première pièce 14" façon gigogne. Avantageusement, il en résulte une facilité de stockage lorsque la boite d'étanchéité 1" est en position rétractée, du fait de son faible encombrement. Pour assurer l'étanchéité à l'air, au niveau des orifices inférieur et supérieur 11, 12, le boitier de réservation 1" comporte des éléments d'étanchéité (non représentés). A cet effet, l'extérieure de la paroi inférieure 9 est revêtue d'un premier élément d'étanchéité. En outre, l'intérieure la paroi supérieure 10 est revêtue d'un second élément d'étanchéité.

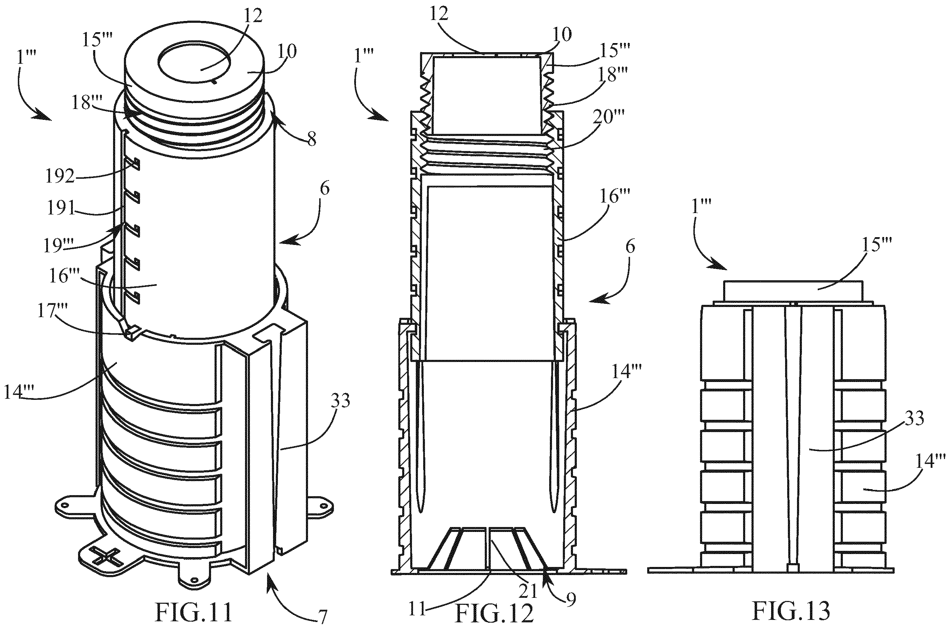

Selon la troisième variante de réalisation représentée aux figures 11 à 13, le boitier de réservation 1"' est également constitué de trois pièces coaxiales, emboîtées et coulissant les unes dans les autres, dites première pièce 14"', deuxième pièce 15"' et troisième pièce intermédiaire 16"' et qui forment la paroi périphérique 6. Les moyens de liaison 17"' et 19"' respectivement des première et troisième pièces 14"', 16'" restent identiques à ceux décrits ci-dessus. A l'inverse, les moyens de liaison 18"' et 20"' respectivement des deuxième et troisième pièces 15"', 16"' sont remplacés par des tronçons male - femelle. Le tronçon male 18"' de la deuxième pièce 15"' comporte un taraudage et le tronçon femelle 20" de la troisième pièce 16'" comporte un filetage. De tels moyens de liaison 18"', 20"' à vis permettent un ajustement plus fin de la hauteur du boitier de réservation 1" comme décrit en référence aux figures 8 à 10.

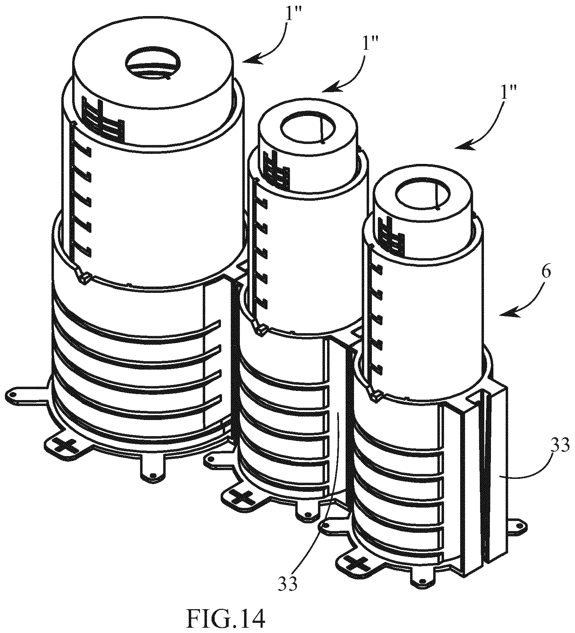

De préférence, la paroi périphérique 6 est cylindrique et comporte sur une partie au moins de sa face externe des gorges périphériques 28 pour améliorer l'ancrage du boitier de réservation 1, 1', 1", 1"' dans l'élément de construction 2. La paroi périphérique 6 peut également comporter des moyens de fixation 33 avec un boitier de réservation adjacent ayant des formes complémentaires qui se présentent par exemple sous la forme d'une liaison nervure-glissière, comme le représente en particulier la figure 14. Bien entendu, le boitier de réservation 1, 1', 1", 1"' peut présenter d'autres formes. Le boitier de réservation 1, 1', 1 ", 1"' est réalisé dans un matériau polymère, tel que par exemple du PVC (polychlorure de vinyle), polypropylène, polystyrène choc, polyéthylène basse densité (PEBD) ou toute autre matière équivalente. Il peut être obtenu par moulage par injection ou par usinage, par exemple.

L'invention concerne également l'élément de construction 2 intégrant le boitier de réservation 1, 1', 1", 1"'. La figure 15 illustre un élément de construction, tel qu'un plancher 2 intégrant le boitier de réservation 1 selon la première variante décrite et représenté à la figure 1. Le boitier de réservation 1 traverse les extrémités inférieure et supérieur 31, 32 du plancher 2 selon leur perpendiculaire. Une gaine 4 intégrant un câble 5 est intégrée dans l'extrémité inférieure 7 du boitier de réservation 1 et traverse en partie le boitier de réservation 1. A l'inverse, le câble 5 traverse l'intégralité du boitier de réservation 1 et débouche à l'extrémité supérieure 8 du boitier de réservation 1 par l'orifice supérieur 12, au niveau de l'extrémité supérieur 32 du plancher 2.

### Possibilités d'application industrielle :

Il ressort clairement de cette description que l'invention permet d'atteindre les buts fixés, à savoir proposer un boitier de réservation 1, 1', 1", 1"' et un élément de construction 2 intégrant un tel boitier de réservation 1, 1', 1", 1"', évitant les déperditions thermiques et facilement ajustable à toutes épaisseurs d'élément de construction 2.

Pour mettre en oeuvre l'invention, on procède dans un premier temps à la mise en place du boitier de réservation 1, selon la figure 1, sur le fond du coffrage de l'élément de construction 2. On fixe alors le boitier de réservation 1 au moyen des pattes de fixation 22, 22', 22" sur le fond du coffrage, par exemple, avec des clous traversant les orifices 23 ou tous autres moyens de fixation. Lorsque l'on souhaite placer une pluralité de boitiers de réservation 2, les zones d'emboitement complémentaires 24, 24' de deux boitiers 1 adjacents sont emboitées l'une dans l'autre. Par conséquent, les boitiers de réservation 1 sont bien ancrés au coffrage. On règle ensuite la hauteur du boitier de réservation 1 en tournant, par exemple, la troisième pièce intermédiaire 16 qui permet un réglage relativement grand du fait de son recouvrement avec la première pièce 14. Il peut donc en résulter que la hauteur du boitier de réservation 1 soit supérieure ou égale à l'épaisseur de l'élément de construction 2. L'on peut alors procéder à l'étape de coulage du béton dans le coffrage pour former l'élément de construction 2. Après coulage de la dalle, la gaine 4 est alors insérée dans l'orifice inférieur 11, jusqu'à buter contre le second élément d'étanchéité 13' situé à l'intérieur du boitier de réservation 1. Pour permettre le passage du câble 5 à travers l'élément d'étanchéité 13', on retire la deuxième pièce 15 formant le couvercle du boîtier de réservation 1. L'élément d'étanchéité 13' est découpé selon l'encoche 30. On tire ensuite le câble 5 jusqu'à ce qu'il débouche au moins au niveau de l'extrémité supérieure 32 de l'élément de construction 2. La deuxième pièce 15 formant le couvercle du boitier de réservation 1 est alors enfilée sur le câble 5 par l'élément d'étanchéité 13' et l'orifice supérieur 11, puis elle est assemblée à la troisième pièce intermédiaire 16 via leurs moyens de liaison respectifs 18, 20. Il en résulte que la hauteur du boitier de réservation 1 peut à nouveau être ajustée plus finement.

La présente invention n'est pas limitée aux exemples de réalisation décrits mais s'étend à toute modification et variante évidente pour un homme du métier tout en restant dans l'étendue de la protection définie dans les revendications annexées.

## Revendications

1. Boitier de réservation (1) agencé pour être intégré dans un élément de construction (2), tel qu'un plancher, et pour être traversé par un conduit technique (3) comportant une gaine (4) traversée par un câble (5), ledit boitier de réservation (1) comportant au moins une paroi périphérique (6) agencée pour s'étendre au moins en partie à travers ledit élément de construction (2), ladite paroi périphérique (6) étant pourvue d'une extrémité inférieure (7) fermée au moins en partie par une paroi inférieure (9) et d'une extrémité supérieure (8) fermée au moins en partie par une paroi supérieure (10), lesdites parois inférieure et supérieure (9, 10) comportant respectivement au moins un orifice inférieur (11) et au moins un orifice supérieur (12) agencés pour être traversés par ledit conduit technique (3), ledit boitier de réservation (1) comportant des premier et second éléments d'étanchéité (13, 13') agencés pour assurer l'étanchéité à l'air de part et d'autre des extrémités inférieure et supérieure (7, 8) du boitier de réservation (1), le premier élément d'étanchéité (13) étant agencé pour enserrer la gaine (4) et garantir l'étanchéité à l'air autour de la gaine (4), ledit boitier de réservation (1) comportant une première pièce (14) et une deuxième pièce (15) assemblées coaxialement pour former ladite paroi périphérique (6), ladite première pièce (14) comportant l'extrémité inférieure (7) dudit boitier de réservation (1) et ladite deuxième pièce (15) comportant l'extrémité supérieure (8) dudit boitier de réservation (1), **caractérisé en ce que** la première et la deuxième pièces (14, 15,) comportent chacune des moyens de liaison (17, 18) agencés pour permettre leur assemblage et pour ajuster la hauteur dudit boitier de réservation (1), **en ce qu'**il comporte une troisième pièce intermédiaire (16) disposée entre lesdites première et deuxième pièces (14, 15,) et comportant des moyens de liaison (19, 20) agencés pour coopérer avec les moyens de liaison (17, 18) des première et deuxième pièces (14, 15), **en ce que** lesdits moyens de liaison (17, 18, 19, 20) sont des moyens de liaison à vis permettant un ajustement continu de la hauteur, **en ce que** le moyen de liaison de la première pièce (14) est constitué d'au moins un tronçon femelle taraudé (17), **en ce que** le moyen de liaison de la deuxième pièce (15) est constitué d'au moins un embout male fileté (18) et **en ce que** les moyens de liaison de la troisième pièce intermédiaire (16) consistent, d'une part, en un embout male fileté (19) agencé pour coopérer avec le tronçon femelle taraudé (17) de la première pièce (14) et, d'autre part, en un tronçon femelle taraudé (20) agencé pour coopérer avec l'embout male fileté (18) de la deuxième pièce (16), **en ce que** ledit second élément d'étanchéité (13') est agencé pour enserrer ledit câble (5) et pour garantir l'étanchéité à l'air autour du câble (5), **en ce que** ledit premier élément d'étanchéité (13) est disposé à l'extérieur de la paroi inférieure (9), et **en ce que** ledit second élément d'étanchéité (13') est disposé à l'extrémité de l'embout mâle (18) de la deuxième pièce (15).

2. Boitier de réservation (1') agencé pour être intégré dans un élément de construction (2), tel qu'un plancher, et pour être traversé par un conduit technique (3) comportant une gaine (4) traversée par un câble (5), ledit boitier de réservation (1') comportant au moins une paroi périphérique (6) agencée pour s'étendre au moins en partie à travers ledit élément de construction (2), ladite paroi périphérique (6) étant pourvue d'une extrémité inférieure (7) fermée au moins en partie par une paroi inférieure (9) et d'une extrémité supérieure (8) fermée au moins en partie par une paroi supérieure (10), lesdites parois inférieure et supérieure (9, 10) comportant respectivement au moins un orifice inférieur (11) et au moins un orifice supérieur (12) agencés pour être traversés par ledit conduit technique (3), ledit boitier de réservation (1') comportant des premier et second éléments d'étanchéité (13) agencés pour assurer l'étanchéité à l'air de part et d'autre des extrémités inférieure et supérieure (7, 8) du boitier de réservation (1'), le premier élément d'étanchéité (13) étant agencé pour enserrer la gaine (4) et garantir l'étanchéité à l'air autour de la gaine (4), ledit boitier de réservation (1') comportant une première pièce (14') et une deuxième pièce (15') assemblées coaxialement pour former ladite paroi périphérique (6), ladite première pièce (14') comportant l'extrémité inférieure (7) dudit boitier de réservation (1') et ladite deuxième pièce (15') comportant l'extrémité supérieure (8) dudit boitier de réservation (1'), **caractérisé en ce que** la première et la deuxième pièces (14'15') comportent chacune des moyens de liaison (25, 26) agencés pour permettre leur assemblage et pour ajuster la hauteur dudit boitier de réservation (1'), **en ce que** les première et deuxième pièces (14', 15') sont identiques et comportent chacune des moyens de liaison consistant, d'une part, en un tronçon femelle taraudé (25) situé à une extrémité et, d'autre part, en un embout male fileté (26) situé à l'autre extrémité, **en ce que** l'extrémité de la pièce comportant l'embout male (26) est de forme sensiblement conique orientée vers le haut dudit boitier de réservation (1'), est constituée d'une pluralité de languettes (21) radiales flexibles et est terminée par un orifice (27), **en ce que** ledit second élément d'étanchéité (13) est agencé pour enserrer ledit câble (5) et pour garantir l'étanchéité à l'air autour du câble (5), et **en ce que** l'embout male (26) de chaque première et deuxième pièces (14', 15') est muni d'un des premier et second éléments d'étanchéité (13) lequel est disposé sur ledit orifice (27).

3. Boitier de réservation (1", 1"') agencé pour être intégré dans un élément de construction (2), tel qu'un plancher, et pour être traversé par un conduit technique (3) comportant une gaine (4) traversée par un câble (5), ledit boitier de réservation (1", 1"') comportant au moins une paroi périphérique (6) agencée pour s'étendre au moins en partie à travers ledit élément de construction (2), ladite paroi périphérique (6) étant pourvue d'une extrémité inférieure (7) fermée au moins en partie par une paroi inférieure (9) et d'une extrémité supérieure (8) fermée au moins en partie par une paroi supérieure (10), lesdites parois inférieure et supérieure (9, 10) comportant respectivement au moins un orifice inférieur (11) et au moins un orifice supérieur (12) agencés pour être traversés par ledit conduit technique (3), ledit boitier de réservation (1", 1"') comportant des premier et second éléments d'étanchéité (13, 13') agencés pour assurer l'étanchéité à l'air de part et d'autre des extrémités inférieure et supérieure (7, 8) du boitier de réservation (1", 1"') le premier élément d'étanchéité (13) étant agencé pour enserrer la gaine (4) et garantir l'étanchéité à l'air autour de la gaine (4), ledit boitier de réservation (1", 1"') comportant une première pièce (14", 14"') et une deuxième pièce (15", 15"') assemblées coaxialement pour former ladite paroi périphérique (6), ladite première pièce (14", 14"') comportant l'extrémité inférieure (7) dudit boitier de réservation (1", 1"') et ladite deuxième pièce (15", 15"') comportant l'extrémité supérieure (8) dudit boitier de réservation (1", 1"'), **caractérisé en ce que** la première et la deuxième pièces (14", 14"', 15", 15"') comportent chacune des moyens de liaison (17", 17"', 18", 18"') agencés pour permettre leur assemblage et pour ajuster la hauteur dudit boitier de réservation (1", 1"'), **en ce qu'**il comporte une troisième pièce intermédiaire (16") disposée entre lesdites première et deuxième pièces (14", 15") et comportant des moyens de liaison (19", 20") agencés pour coopérer avec les moyens de liaison (17", 18") des première et deuxième pièces (14", 15"), **en ce que** ledit boitier de réservation (1", 1"') est de construction télescopique, **en ce que** les moyens de liaison (17", 17"', 19", 19"') de la première pièce (14", 14"') avec la troisième pièce (16", 16"') consistent en une liaison glissière crantée, **en ce que** ledit second élément d'étanchéité (13, 13') est agencé pour enserrer ledit câble (5) et pour garantir l'étanchéité à l'air autour du câble (5), **en ce que** ledit premier élément d'étanchéité (13) est disposé à l'extérieur de la paroi inférieure (9), **en ce que** ledit second élément d'étanchéité (13') est disposé à l'intérieur de la paroi supérieure (10).

4. Boitier de réservation selon la revendication 1, **caractérisé en ce que** ledit premier élément d'étanchéité (13) comporte une ouverture (29) adaptée pour épouser la gaine (4) et **en ce que** ledit second élément d'étanchéité (13') comporte une encoche (30) prédécoupée adaptée pour épouser la câble (5).

5. Boitier de réservation selon la revendication 1, **caractérisé en ce que** ledit second élément d'étanchéité (13') de l'extrémité supérieure (8) du boitier de réservation (1) est situé entre ladite deuxième pièce (15) et ladite troisième pièce intermédiaire (16).

6. Boitier de réservation selon la revendication 3, **caractérisé en ce que** les moyens de liaison (18", 20") de la deuxième pièce (15") avec la troisième pièce (16") consistent en une liaison glissière crantée.

7. Boitier de réservation selon la revendication 3, **caractérisé en ce que** les moyens de liaison (18"', 20") de la deuxième pièce (15"') avec la troisième pièce (16"') consistent en une liaison male-femelle filetée.

8. Boitier de réservation selon les revendications 1 ou 3, **caractérisé en ce que** ladite paroi inférieure (9) présente une forme sensiblement conique orientée vers le haut dudit boîtier (1) et terminée par ledit orifice inférieur (11).

9. Boitier de réservation selon la revendication 8, **caractérisé en ce que** ladite paroi inférieure (9) est constituée d'une pluralité de languettes (21) radiales flexibles.

10. Boitier de réservation selon la revendication 2, **caractérisé en ce que** la première pièce (14') comporte ledit premier élément d'étanchéité (13) lequel est localisé à mi-hauteur dudit boitier (1) et **en ce que** la deuxième pièce (15') comporte ledit second élément d'étanchéité (13) lequel est localisé à l'extrémité supérieure dudit boitier (1).

11. Boitier de réservation selon l'une quelconque des revendications précédentes, **caractérisé en ce que** lesdits éléments d'étanchéité (13, 13') sont constitués de membranes élastiques et étanches.

12. Boitier de réservation selon l'une quelconque des revendications 1 à 3, **caractérisé en ce qu'**il comporte des organes de fixation (22, 22', 22", 33) s'étendant radialement de la paroi inférieure (9) ou de la paroi périphérique (6) et agencés pour maintenir en position ledit boitier de réservation (1, 1', 1", 1"') sur le coffrage et/ou pour assembler deux boitiers de réservation (1, 1') adjacents.

13. Boitier de réservation selon l'une quelconque des revendications 1 à 3, **caractérisé en ce que** la paroi périphérique (6) est cylindrique et comporte sur une partie au moins de sa face externe des gorges périphériques (28) pour améliorer l'ancrage du boitier de réservation (1, 1', 1", 1"') dans l'élément de construction (2).

14. Boitier de réservation selon l'une quelconque des revendications 1 à 3, **caractérisé en ce que** les orifices inférieur et supérieur (11, 12) du boitier de réservation (1, 1', 1", 1"') sont coaxiaux et **en ce que** le diamètre de l'orifice inférieur (11) est supérieur au diamètre de l'orifice supérieur (12).

15. Elément de construction (2) tel qu'un plancher ou un mur, **caractérisé en ce qu'**il comporte au moins un boitier de réservation (1, 1', 1", 1"') selon l'une quelconque des revendications précédentes, ledit boîtier de réservation (1, 1', 1", 1"') étant intégré et s'étendant au moins en partie à travers ledit élément de construction (2) pour être traversé au moins en partie par un conduit technique (3) comportant une gaine (4) traversée par un câble (5), ledit boîtier de réservation (1, 1', 1", 1"') étant agencé pour pouvoir être ajusté en hauteur à l'épaisseur dudit élément de construction (2) et pour garantir l'étanchéité à l'air autour de la gaine (4) et autour du câble (5) de part et d'autre dudit boîtier de réservation.

## Patentansprüche

1. Aussparungskasten (1), ausgelegt, um in ein Bauelement (2) wie eine Zimmerdecke integriert zu werden, und um von einer technischen Leitung (3) durchquert zu werden, welche aus einem vom einem Kabel (5) durchquerten Rohr (5) besteht, wobei besagter Aussparungskasten (1) zumindest eine periphere Wand (6) beträgt, die ausgelegt ist, um sich zumindest zum Teil durch besagtes Bauelement (2) hindurch zu erstrecken, wobei besagte periphere Wand (6) mit einem zumindest zum Teil durch eine untere Wand (9) geschlossenen unteren Ende (7), sowie mit einem zumindest zum Teil durch eine obere Wand (10) geschlossenen oberen Ende (8) versehen ist, wobei besagte untere und obere Wand (9, 10) zumindest eine untere Öffnung (11) bzw. zumindest eine obere Öffnung (12) betragen, die ausgelegt sind, um von besagter technischen Leitung (3) durchquert zu werden, wobei besagter Aussparungskasten (1) erste und zweite Abdichtungselemente (13, 13') beträgt, die ausgelegt sind, um beidseitig des unteren und oberen Endes (7, 8) des Aussparungskastens (1) die Luftdichtheit zu gewähren, wobei das erste Abdichtungselement (13) ausgelegt ist, um das Rohr (4) einzuschließen und die Luftdichtheit um das Rohr (4) zu gewährleisten, wobei besagter Aussparungskasten (1) ein erstes Teil (14) und ein zweites Teil (15) beträgt, die koaxial zusammengefügt sind, um besagte periphere Wand (6) zu bilden, wobei besagtes erstes Teil (14) das untere Ende (7) von besagtem Aussparungskasten (1) beträgt und besagtes zweites Teil (15) das obere Ende (8) von besagtem Aussparungskasten (1) beträgt, **dadurch gekennzeichnet, dass** das erste und das zweite Teil (14, 15) jeweils Verbindungsmittel (17, 18) betragen, die ausgelegt sind, um ihren Zusammenbau zu ermöglichen und um die Höhe von besagtem Aussparungskasten (1) einzustellen, dadurch, dass er ein drittes, zwischen besagtem ersten und zweiten Teil (14, 15) angeordnetes Zwischenteil (16) beträgt, das Verbindungsmittel (19, 20) beträgt, die ausgelegt sind, um mit den Verbindungsmitteln (17, 18) der ersten und des zweiten Teils (14, 15) zusammenzuarbeiten, dadurch, das besagte Verbindungsmittel (17, 18, 19, 20) schraubbare Verbindungsmittel sind, die eine kontinuierliche Einstellung der Höhe ermöglichen, dadurch, das das Verbindungsmittel des ersten Teils (14) aus zumindest einem Innengewindeabschnitt (17) besteht, dadurch, dass das Verbindungsmittel des zweiten Teils (15) aus zumindest einem Einsatz mit einem Außengewinde (18) besteht, und dadurch, dass die Verbindungsmittel des dritten Zwischenteils (16) einerseits aus einem Einsatz mit einem Außengewinde (19) bestehen, der ausgelegt ist, um mit dem Innengewindeabschnitt (17) des ersten Teils (14) zusammen zu arbeiten und, andererseits, aus einem Innengewindeabschnitt (20), der ausgelegt ist, um mit dem Einsatz mit Außengewinde (18) des zweiten Teils (16) zusammen zu arbeiten, dadurch, dass besagtes zweites Abdichtungselement (13') ausgelegt ist, um besagtes Kabel (5) einzuschließen und die Luftdichtheit um das Kabel (5) zu gewährleisten, dadurch das besagtes erstes Abdichtungselement (13) außerhalb der unteren Wand (9) angeordnet ist, und dadurch, dass besagtes zweites Abdichtungselement (13') am Ende des Einsatzes (18) des zweiten Teils (15) angeordnet ist.

2. Aussparungskasten (1'), ausgelegt, um in ein Bauelement (2) wie eine Zimmerdecke integriert zu werden, und um von einer technischen Leitung (3) durchquert zu werden, welche aus einem vom einem Kabel (5) durchquerten Rohr (5) besteht, wobei besagter Aussparungskasten (1') zumindest eine periphere Wand (6) beträgt, die ausgelegt ist, um sich zumindest zum Teil durch besagtes Bauelement (2) hindurch zu erstrecken, wobei besagte periphere Wand (6) mit einem zumindest zum Teil durch eine untere Wand (9) geschlossenen unteren Ende (7), sowie mit einem zumindest zum Teil durch eine obere Wand (10) geschlossenen oberen Ende (8) versehen ist, wobei besagte untere und obere Wand (9, 10) zumindest eine untere Öffnung (11) bzw. zumindest eine obere Öffnung (12) betragen, die ausgelegt sind, um von besagter technischen Leitung (3) durchquert zu werden, wobei besagter Aussparungskasten (1') erste und zweite Abdichtungselemente (13) beträgt, die ausgelegt sind, um beidseitig des unteren und oberen Endes (7, 8) des Aussparungskastens (1') die Luftdichtheit zu gewähren, wobei das erste Abdichtungselement (13) ausgelegt ist, um das Rohr (4) einzuschließen und die Luftdichtheit um das Rohr (4) zu gewährleisten, wobei besagter Aussparungskasten (1') ein erstes Teil (14') und ein zweites Teil (15') beträgt, die koaxial zusammengefügt sind, um besagte periphere Wand (6) zu bilden, wobei besagtes erstes Teil (14') das untere Ende (7) von besagtem Aussparungskasten (1') beträgt und besagtes zweites Teil (15') das obere Ende (8) von besagtem Aussparungskasten (1') beträgt, **dadurch gekennzeichnet, dass** das erste und das zweite Teil (14', 15') jeweils Verbindungsmittel (25, 26) betragen, die ausgelegt sind, um ihren Zusammenbau zu ermöglichen und um die Höhe von besagtem Aussparungskasten (1') einzustellen, dadurch, dass das erste und das zweite Teil (14', 15') identisch sind und jeweils Verbindungsmittel betragen, die einerseits aus einem an einem Ende befindlichen Innengewindeabschnitt (25) und andererseits aus einem an dem anderen Ende befindlichen Einsatz mit einem Außengewinde (26) besteht, dadurch, dass das Ende des Teils mit dem Einsatz (26) eine merklich konische, nach dem Oberteil von besagtem Aussparungskasten (1') hin gerichtete Form aufweist, aus einer Vielzahl flexibler Radialzungen (21) besteht und mit einer Öffnung (27) beendet ist, dadurch, dass besagtes zweites Abdichtungselement (13) ausgelegt ist, um besagtes Kabel (5) einzuschließen und die Luftdichtheit um das Kabel (5) zu gewährleisten, und dadurch, dass der Einsatz (26) von jedem ersten und zweiten Teil (14', 15') mit einem der ersten und zweiten Abdichtungselemente (13) versehen ist, das auf besagter Öffnung (27) angeordnet ist.

3. Aussparungskasten (1", 1"'), ausgelegt, um in ein Bauelement (2) wie eine Zimmerdecke integriert zu werden, und um von einer technischen Leitung (3) durchquert zu werden, welche aus einem vom einem Kabel (5) durchquerten Rohr (5) besteht, wobei besagter Aussparungskasten (1", 1"') zumindest eine periphere Wand (6) beträgt, die ausgelegt ist, um sich zumindest zum Teil durch besagtes Bauelement (2) hindurch zu erstrecken, wobei besagte periphere Wand (6) mit einem zumindest zum Teil durch eine untere Wand (9) geschlossenen unteren Ende (7), sowie mit einem zumindest zum Teil durch eine obere Wand (10) geschlossenen oberen Ende (8) versehen ist, wobei besagte untere und obere Wand (9, 10) zumindest eine untere Öffnung (11) bzw. zumindest eine obere Öffnung (12) betragen, die ausgelegt sind, um von besagter technischen Leitung (3) durchquert zu werden, wobei besagter Aussparungskasten (1", 1"') erste und zweite Abdichtungselemente (13, 13') beträgt, die ausgelegt sind, um beidseitig des unteren und oberen Endes (7, 8) des Aussparungskastens (1", 1"') die Luftdichtheit zu gewähren, wobei das erste Abdichtungselement (13) ausgelegt ist, um das Rohr (4) einzuschließen und die Luftdichtheit um das Rohr (4) zu gewährleisten, wobei besagter Aussparungskasten (1", 1"') ein erstes Teil (14", 14"') und ein zweites Teil (15", 15"') beträgt, die koaxial zusammengefügt sind, um besagte periphere Wand (6) zu bilden, wobei besagtes erstes Teil (14", 14"') das untere Ende (7) von besagtem Aussparungskasten (1", 1"') beträgt und besagtes zweites Teil (15", 15"') das obere Ende (8) von besagtem Aussparungskasten (1", 1"') beträgt, **dadurch gekennzeichnet, dass** das erste und das zweite Teil (14", 14'", 15", 15'") jeweils Verbindungsmittel (17", 17"', 18", 18'") betragen, die ausgelegt sind, um ihren Zusammenbau zu ermöglichen und um die Höhe von besagtem Aussparungskasten (1", 1"') einzustellen, dadurch, dass er ein drittes, zwischen besagtem ersten und zweiten Teil (14", 15") angeordnetes Zwischenteil (16") beträgt, das Verbindungsmittel (19", 20") beträgt, die ausgelegt sind, um mit den Verbindungsmitteln (17", 18") der ersten und des zweiten Teils (14", 15") zusammenzuarbeiten, dadurch, das besagter Aussparungskasten (1", 1"') einen teleskopischen Aufbau aufweist, dadurch, das die Verbindungsmittel (17", 17"', 19", 19"') des ersten Teils (14", 14"') mit dem dritten Teil (16", 16"') aus einer gleitenden einrastbaren Verbindung bestehen, dadurch, das besagtes zweites Abdichtungselement (13, 13') ausgelegt ist, um besagtes Kabel (5) einzuschließen und die Luftdichtheit um das Kabel (5) zu gewährleisten, dadurch das besagtes erstes Abdichtungselement (13) außerhalb der unteren Wand (9) angeordnet ist, und dadurch, dass besagtes zweites Abdichtungselement (13') innerhalb der oberen Wand (10) angeordnet ist.

4. Aussparungskasten nach Anspruch 1, **dadurch gekennzeichnet, dass** besagtes erstes Abdichtungselement (13) eine Öffnung (29) beträgt, die angepasst ist, um sich an das Rohr (4) anzuschmiegen, und dadurch, dass besagtes zweites Abdichtungselement (13') einen Einschnitt (30) beträgt, der angepasst ist, um sich an das Kabel (5) anzuschmiegen.

5. Aussparungskasten nach Anspruch 1, **dadurch gekennzeichnet, dass** besagtes zweites Abdichtungselement (13') des oberen Endes (8) von Aussparungskasten (1) sich zwischen besagtem zweiten Teil (15) und besagtem dritten Zwischenteil (16) befindet.

6. Aussparungskasten nach Anspruch 3, **dadurch gekennzeichnet, dass** die Verbindungsmittel (18", 20") des zweiten Teils (15") mit dem dritten Teil (16") aus einer gleitenden einrastbaren Verbindung bestehen.

7. Aussparungskasten nach Anspruch 3, **dadurch gekennzeichnet, dass** die Verbindungsmittel (18"', 20") des zweiten Teils (15"') mit dem dritten Teil (16"') aus einer Innen- /Außengewinde-Verbindung bestehen.

8. Aussparungskasten nach Anspruch 1 oder 3, **dadurch gekennzeichnet, dass** besagte untere Wand (9) eine merklich konische, nach dem Oberteil von besagtem Aussparungskasten (1) hin gerichtete Form aufweist und mit besagter unteren Öffnung (11) endet.

9. Aussparungskasten nach Anspruch 8, **dadurch gekennzeichnet, dass** besagte untere Wand (9) aus einer Vielzahl flexibler Radialzungen (21) besteht.

10. Aussparungskasten nach Anspruch 2, **dadurch gekennzeichnet, dass** das erste Teil (14') das besagte erste Abdichtungselement (13) beträgt, welches auf halber Höhe von besagtem Kasten (1) angeordnet ist, und dadurch, dass das zweite Teil (15') das besagte zweite Abdichtungselement (13) beträgt, welches am oberen Ende von besagtem Kasten (1) angeordnet ist.

11. Aussparungskasten nach einem beliebigen der vorhergehenden Ansprüche, **dadurch gekennzeichnet, dass** besagte Abdichtungselemente (13, 13') aus elastischen und dichten Membranen bestehen.

12. Aussparungskasten nach einem beliebigen der Ansprüche 1 bis 3, **dadurch gekennzeichnet, dass** er Befestigungsorgane (22, 22', 22", 33) beträgt, die sich radial von der unteren Wand (9) oder von der peripheren Wand (6) aus erstrecken, und die ausgelegt sind, um besagten et Aussparungskasten (1, 1', 1", 1"') auf der Schalung in Position zu halten und/oder, um zwei nebeneinander liegende Aussparungskasten (1, 1') zusammen zu fügen.

13. Aussparungskasten nach einem beliebigen der Ansprüche 1 bis 3, **dadurch gekennzeichnet, dass** die periphere Wand (6) zylindrisch ist, und zumindest auf einem Teil seiner Außenseite Umfangsnuten (28) beträgt, um die Verankerung des Aussparungskastens (1, 1', 1", 1"') in dem Bauelement (2) zu verbessern.

14. Aussparungskasten nach einem beliebigen der Ansprüche 1 bis 3, **dadurch gekennzeichnet, dass** die untere und obere Öffnung (11, 12) von Aussparungskasten (1, 1', 1", 1"') koaxial sind, und dadurch, dass der Durchmesser der unteren Öffnung (11) größer ist, als der Durchmesser der oberen Öffnung (12).

15. Bauelement (2) wie eine Zimmerdecke oder eine Wand, **dadurch gekennzeichnet, dass** es zumindest einen Aussparungskasten (1, 1', 1", 1"') nach einem beliebigen der vorhergehenden Ansprüche beträgt, wobei besagter Aussparungskasten (1, 1', 1", 1"') integriert ist, und sich zumindest zu Teil durch besagtes Bauelement (2) hindurch erstreckt, um zumindest zu Teil von einer technischen Leitung (3) durchquert zu werden, welche aus einem vom einem Kabel (5) durchquerten Rohr (4) besteht, wobei besagter Aussparungskasten (1, 1', 1", 1"') ausgelegt ist, um sich in seiner Höhe an die Dicke von besagtem Bauelement (2) anpassen zu können und um die Luftdichtheit um das Rohr (4) und um das Kabel (5) beidseitig von besagtem Aussparungskasten zu gewährleisten.

## Claims

1. Reservation housing (1) arranged to be integrated in a construction element (2) such as a floor, and to be crossed by a technical duct (3) comprising a sheath (4) crossed by a cable (5), said reservation housing (1) comprising at least one peripheral wall (6) arranged to extend at least partly through said construction element (2), said peripheral wall (6) being provided with a lower end (7) closed at least partly by a lower wall (9) and with an upper end (8) closed at least partly by an upper wall (10), said lower and upper walls (9, 10) comprising respectively at least one lower opening (11) and at least one upper opening (12) arranged to be crossed by said technical duct (3), said reservation housing (1) comprising first and second sealing elements (13, 13') arranged to ensure air tightness on either side of the lower and upper ends (7, 8) of reservation housing (1), the first sealing element (13) being arranged to fit tightly around sheath (4) and ensure air tightness around sheath (4), said reservation housing (1) comprising a first part (14) and a second part (15), which are coaxially assembled to form said peripheral wall (6), said first part (14) comprising lower end (7) of said reservation housing (1) and said second part (15) comprising upper end (8) of said reservation housing (1), **characterized in that** the first and the second part (14, 15) comprise each connecting means (17, 18) arranged to allow assembling them and to adjust the height of said reservation housing (1), **in that** it comprises a third intermediate part (16) located between said first and said second part (14, 15) and comprising connecting means (19, 20) arranged to cooperate with the connecting means (17, 18) of the first and of the second part (14, 15), **in that** said connecting means (17, 18, 19, 20) are screwed connecting means that allow continuous height adjustment, **in that** the connecting means of the first part (14) is made of at least one threaded female section (17), **in that** the connecting means of the second part (15) is made of at least one threaded male section (18) and **in that** the connecting means of the third intermediate part (16) include, on the one hand, a threaded male section (19) arranged to cooperate with the threaded female section (17) of first part (14) and, on the other hand, a threaded female section (20) arranged to cooperate with the threaded male section (18) of second part (16), and **in that** said second sealing element (13') is arranged to fit tightly around said cable (5) and ensure air tightness around cable (5), **in that** said first sealing element (13) is located outside of lower wall (9), and **in that** said second sealing element (13') is located at the end of male section (18) of second part (15).

2. Reservation housing (1') arranged to be integrated in a construction element (2) such as a floor, and to be crossed by a technical duct (3) comprising a sheath (4) crossed by a cable (5), said reservation housing (1') comprising at least one peripheral wall (6) arranged to extend at least partly through said construction element (2), said peripheral wall (6) being provided with a lower end (7) closed at least partly by a lower wall (9) and with an upper end (8) closed at least partly by an upper wall (10), said lower and upper walls (9, 10) comprising respectively at least one lower opening (11) and at least one upper opening (12) arranged to be crossed by said technical duct (3), said reservation housing (1') comprising first and second sealing elements (13) arranged to ensure air tightness on either side of the lower and upper ends (7, 8) of reservation housing (1'), the first sealing element (13) being arranged to fit tightly around sheath (4) and ensure air tightness around sheath (4), said reservation housing (1') comprising a first part (14') and a second part (15'), which are coaxially assembled to form said peripheral wall (6), said first part (14') comprising lower end (7) of said reservation housing (1') and said second part (15') comprising upper end (8) of said reservation housing (1'), **characterized in that** the first and the second part (14', 15') comprise each connecting means (25, 26) arranged to allow assembling them and to adjust the height of said reservation housing (1'), **in that** the first and second parts (14', 15') are identical and comprise each connecting means that include, on the one hand, a threaded female section (25) located at one end and, on the other hand, a threaded male section (26) located at the other end, and **in that** the end of the part comprising the male section (26) has a substantially conical shape oriented towards the top of said reservation housing (1'), is made of a plurality of flexible radial tongues (21) and ends with an opening (27), **in that** said second sealing element (13) is arranged to fit tightly around said cable (5) and ensure air tightness around cable (5), and **in that** the male section (26) of each first and second part (14', 15') is provided with one of the first and second sealing elements (13), which is located on said opening (27).

3. Reservation housing (1", 1"') arranged to be integrated in a construction element (2) such as a floor, and to be crossed by a technical duct (3) comprising a sheath (4) crossed by a cable (5), said reservation housing (1", 1"') comprising at least one peripheral wall (6) arranged to extend at least partly through said construction element (2), said peripheral wall (6) being provided with a lower end (7) closed at least partly by a lower wall (9) and with an upper end (8) closed at least partly by an upper wall (10), said lower and upper walls (9, 10) comprising respectively at least one lower opening (11) and at least one upper opening (12) arranged to be crossed by said technical duct (3), said reservation housing (1", 1"') comprising first and second sealing elements (13, 13') arranged to ensure air tightness on either side of the lower and upper ends (7, 8) of reservation housing (1", 1"'), the first sealing element (13) being arranged to fit tightly around sheath (4) and ensure air tightness around sheath (4), said reservation housing (1", 1"') comprising a first part (14", 14"') and a second part (15", 15"'), which are coaxially assembled to form said peripheral wall (6), said first part (14", 14"') comprising lower end (7) of said reservation housing (1", 1"') and said second part (15", 15"') comprising upper end (8) of said reservation housing (1", 1''), **characterized in that** the first and the second part (14", 14"', 15", 15"') comprise each connecting means (17", 17"', 18", 18"') arranged to allow assembling them and to adjust the height of said reservation housing (1", 1"'), **in that** it comprises a third intermediate part (16") located between said first and said second part (14", 15") and comprising connecting means (19", 20") arranged to cooperate with the connecting means (17", 18") of the first and of the second part (14", 15"), **in that** said reservation housing (1", 1"') has a telescopic construction, **in that** the means (17", 17'", 19", 19"') connecting first part (14", 14"') and third part (16", 16"') include a notched sliding connection, **in that** said second sealing element (13, 13') is arranged to fit tightly around said cable (5) and ensure air tightness around cable (5), **in that** said first sealing element (13) is located outside of lower wall (9), and **in that** said second sealing element (13') is located inside of upper wall (10).

4. Reservation housing according to claim 1, **characterized in that** said first sealing element (13) comprises an opening (29) suitable to fit sheath (4) and **in that** second sealing element (13') comprises a pre-cut notch (30) suitable to fit cable (5).

5. Reservation housing according to claim 1, **characterized in that** said second sealing element (13') of upper end (8) of reservation housing (1) is located between said second part (15) and said third intermediate part (16).

6. Reservation housing according to claim 3, **characterized in that** means (18", 20") connecting second part (15") and third part (16") include a notched sliding connection.

7. Reservation housing according to claim 3, **characterized in that** means (18", 20") connecting second part (15") and third part (16") include a threaded male-female connection.

8. Reservation housing according to claim 1 or 3, **characterized in that** said lower wall (9) has a substantially conical shape oriented towards the top of said housing (1) and ending with said lower opening (11).

9. Reservation housing according to claim 8, **characterized in that** said lower wall (9) is made of a plurality of flexible radial tongues (21).

10. Reservation housing according to claim 2, **characterized in that** first part (14') comprises said first sealing element (13), which is located at mid height of said housing (1) and **in that** second part (15') comprises said second sealing element (13), which is located at the upper end of said housing (1).

11. Reservation housing according to any of the previous claims, **characterized in that** said sealing elements (13, 13') are made of elastic and tight membranes.

12. Reservation housing according to any of claims 1 to 3, **characterized in that** it comprises fastening members (22, 22', 22", 33) that extend radially from lower wall (9) or from peripheral wall (6) and are arranged to hold said reservation housing (1, 1', 1", 1"') in position on the formwork and/or to assemble two adjacent reservation housings (1, 1').

13. Reservation housing according to any of claims 1 to 3, **characterized in that** peripheral wall (6) is cylindrical and comprises on at least a section of its external side peripheral grooves (28) to improve the anchoring of reservation housing (1, 1', 1", 1"') in building element (2).

14. Reservation housing according to any of claims 1 to 3, **characterized in that** the upper and lower openings (11, 12) of reservation housing (1, 1', 1", 1"') are coaxial and **in that** the diameter of lower opening (11) is larger than the diameter of upper opening (12).

15. Construction element (2) such as a floor or a wall, **characterized in that** it comprises at least one reservation housing (1, 1', 1", 1"') according to any of the previous claims, said reservation housing (1, 1', 1", 1"') being integrated and extending at least partly through said construction element (2) to be crossed at least partly by a technical duct (3) comprising a sheath (4) crossed by a cable (5), said reservation housing (1, 1', 1", 1"') being arranged to be adjusted in height to the thickness of said construction element (2) and to ensure the air tightness around sheath (4) and around cable (5) on either side of said reservation housing.
